# EUROPÄISCHE PATENTSCHRIFT

(11) **EP 3 278 664 B1**
(45) Veröffentlichungstag und Bekanntmachung des Hinweises auf die Patenterteilung: **27.02.2019**
(21) Anmeldenummer: 17401084.3
(22) Anmeldetag: 01.08.2017
(51) Int. Cl.: A01M 7/00

(54) **SPRITZGESTÄNGE FÜR EIN PFLANZENSCHUTZGERÄT**
SPRAY BOOM FOR CROP PROTECTION EQUIPMENT
RAMPE DE PULVÉRISATION POUR UN DISPOSITIF DE PROTECTION DES PLANTES

(30) Priorität: 04.08.2016 DE 102016114425
(43) Veröffentlichungstag der Anmeldung: 07.02.2018
(73) Patentinhaber: Amazonen-Werke H. Dreyer GmbH & Co. KG, 49205 Hasbergen (DE)
(72) Erfinder: Kowollik, Daniel, 47443 Moers (DE)

(56) Entgegenhaltungen:
- EP-A1- 2 989 875
- WO-A1-2013/092272
- WO-A1-2016/058925
- GB-A- 2 100 962
- US-A- 5 957 216

## Beschreibung

Die Erfindung betrifft ein Gestänge gemäß Oberbegriff des Patentanspruchs 1.

Bei dem aus EP 2989875 A1 bekannten Gestänge einer Feldspritze sind die Abschnitte nach Art hochkant stehender, schmaler Gitterträger ausgebildet, an deren Untergurten Verteileinrichtungen angebracht sind. Die Abschnitte werden mittels Stellelementen und Schwenkscherensystemen aufgefaltet oder zusammengefaltet. Um in der zusammengefalteten Transportposition möglichst geringe Transportbreite sicherzustellen, sind die Abschnitte relativ schlank und sind die Gelenkbereiche relativ instabil. Bei den oft hohen Arbeitsbreiten solcher Gestänge, z. B. bis zu 45 m und mehr, resultiert wegen Bodenunebenheiten, der Fahrbewegung, Windeinflüssen, und dergleichen eine 'Tendenz der Gestänge, im Wesentlichen bodenparallel zu schwingen. Diese Schwingungen, die sich in der Arbeitsstellung an den äußersten Abschnitten am stärksten auswirken, resultieren in lokaler Über- oder Unterversorgungen am Boden, die die Ausbringqualität verschlechtern und zu vermeiden sind.

Der Erfindung liegt die Aufgabe zugrunde, ein Gestänge der eingangs genannten Art dahingehend zu verbessern, dass Schwingungen in der Arbeitsstellung minimiert oder vermieden werden, um die Ausbringqualität zu optimieren.

Die gestellte Aufgabe wird mit den Merkmalen des Patentanspruchs 1 gelöst.

Da die an einem Abschnitt angeordnete Schwenkstrebe das Gelenk mit Abstand überbrückt und am Ende des nächsten Abschnitts abstützbar oder verriegelbar ist, wird der Gelenkbereich wirksam so ausgesteift, dass Schwingungen in einer im Wesentlichen bodenparallelen Ebene minimiert oder vermieden werden. Dabei wird zweckmäßig die Schwenkstrebe aus ihrer Stauposition beim durch das Stellelement bewirkten Auffalten der beiden aneinander angrenzenden Abschnitte vom Stellelement selbsttätig in die Aussteifposition gebracht, in der sie in der Arbeitsstellung den Gelenkbereich optimal aussteift.

Bei einer zweckmäßigen Ausführungsform wird die Schwenkstrebe in Schwenkrichtung zur Stauposition federbelastet, z. B. durch eine Zugfeder oder eine Torsionsfeder. Dadurch ist sichergestellt, dass die Schwenkstrebe selbsttätig ihre Stauposition einnimmt, sobald das Stellelement nicht mehr einwirkt. Allerdings soll dies nicht ausschließen, die Schwenkstrebe in beiden Schwenkrichtungen durch das Stellelement zu verschwenken, oder für das Verschwenken der Schwenkstrebe ein eigenes Stellelement vorzusehen.

Da die lokale Aussteifung im Gelenkbereich durch die Schwenkstrebe unter Umständen die Schwingungsneigung des Gestänges in der Arbeitsstellung nicht ausreichend minimiert, ist nach einem besonders wichtigen Gedanken der Erfindung die Schwenkstrebe an einem als Fachwerkrahmen ausgebildeten Querschenkel des einen Abschnitts in einem annähernd zum Gelenk parallelen Strebengelenk angeordnet, wobei der Querschenkel in etwa bodenparallel gegenüber einer dem Gelenk abgewandten Hochseite des Abschnitts vorspringt, und somit den Abschnitt über seine gesamte Länge gegen Schwingungen in einer Ebene parallel zum Boden aussteift. Außerdem wirkt bei der Anbringung der Schwenkstrebe an dem Querschenkel die Schwenkstrebe mit einem optimal großen Hebel an in Bezug auf das Gelenk. Der andere Abschnitt weist ebenfalls einen vom Gelenk abgewandt vorspringenden Querschenkel auf, an welchem die Schwenkstrebe in der Aussteifposition angreift. Auf diese Weise wird das Gestänge, gegebenenfalls ausgenommen dem äußersten Abschnitt, über seine gesamte Wirklänge effektiv gegen Schwingungen versteift.

Um die Abschnitte in der Transportposition innerhalb einer vorgeschriebenen Transportbreite verstauen zu können, ist es zweckmäßig, dass die beiden Gelenke an den Enden des Abschnitts bezüglich einer Längsachse des Abschnitts in Querrichtung gegeneinander versetzt sind, so dass sich das Gestänge zick-zack-förmig auf engstem Unterbringungsraum zusammenfalten lässt.

Bei einer zweckmäßigen Gestänge-Ausführungsform mit mehreren Abschnitten springen die an aufeinanderfolgenden Abschnitten angeordneten Querschenkel abwechselnd gegenüber den Hochseiten vor, gegebenenfalls ausgenommen jeden in der Arbeitsstellung äußersten Abschnitt. Dieses Konzept ist ggf. der Querversetzung der Gelenke an den beiden Enden eines jeden Abschnitts und trotz der Querschenkel möglichst geringer Transportbreite geschuldet.

Nach einem weiteren wichtigen Gedanken sind die Querschenkel und/oder Oberseiten der Abschnitte derart auf unterschiedlichen Höhenniveaus in Bezug zueinander angeordnet, dass die Querschenkel in der Transportstellung des Gestänges einander überlappend ineinander geschachtelt werden. Auf diese Weise wird trotz der in einer Ebene parallel zum Boden durch den Querschenkel vergrößerten Breite des Abschnitts die Transportbreite eingehalten.

Günstig ist der jeweilige Querschenkel wie auch die Schwenkstrebe jeweils an der dem Boden abgewandten Oberseite des Abschnitts angeordnet. Dies soll nicht ausschließen, den Querschenkel und die Schwenkstrebe innerhalb der Höhenerstreckung des Abschnittes zu positionieren.

Bei einer zweckmäßigen Ausführungsform ist das Strebengelenk mit einem Stützgelenk des Stellelements kombiniert, was eine bauliche Vereinfachung ergibt, und zwar, vorzugsweise, an einem Außenprofil des den Querschenkel bildenden Fachwerkrahmens.

Herstellungstechnisch einfach ist die Schwenkstrebe ein langgestrecktes U-Profil, das mit zum Außenprofil weisender offener U-Seite verbaut ist, und das zum Angriff am nächsten Abschnitt am freien Ende eine abgewinkelte Stützplatte aufweist. Dadurch ist die Schwenkstrebe bei geringem Gewicht außerordentlich druck- und biegefest.

In einer Ausführungsform kann die Stützplatte wenigstens einen Eingriffsschlitz und/oder an einem freien Stützplattenrand eine Mitnehmerlasche aufweisen. Der Eingriffsschlitz kann zum Anbringen eines Anschlags genutzt werden. Die Mitnehmerlasche erhöht nicht nur die Gestaltfestigkeit der Stützplatte der Schwenkstrebe, sondern sichert auch eine verschleißarme und einfache Möglichkeit zur Schwenkverstellung der Schwenkstrebe.

Im Eingriffsschlitz, oder in jedem Eingriffsschlitz, ist ein Anschlag positionierbar, der auf einen Gegenanschlag an einer Stützfläche am Ende des anderen Abschnitts ausrichtbar ist. Der Anschlag und/oder der Gegenanschlag kann einstellbar sein, um etwaige Fertigungstoleranzen oder Verschleißerscheinungen kompensieren zu können. Dabei ist es denkbar, dass der Anschlag und der Gegenanschlag in der Arbeitsstellung des Gestänges ineinander verriegelt sind, so dass die Schwenkstrebe Druckkräfte und Zugkräfte abzutragen vermag.

Die Stützfläche des anderen Abschnitts kann an einem oberseitig auf dem Querschenkel des anderen Abschnitts montierten Profil angeordnet sein, das die Stützkraft über optimal große Länge überträgt.

Um in der Transportstellung durch die Schwenkstrebe möglichst wenig Platz zu beanspruchen, ist es zweckmäßig, die Schwenkstrebe in der Stauposition über das Außenprofil des Fachwerkrahmens zu stülpen, beispielsweise so, dass das Außenprofil in die Schwenkstrebe eintritt.

In einer zweckmäßigen Ausführungsform ist das Stellelement ein doppelt wirkender Hydrozylinder, insbesondere Stangenzylinder. Alternativ könnte das Stellelement ein Pneumatikzylinder oder eine elektrisch angetriebene Schraubspindel sein. Der Hydrozylinder greift an einem Schwenkscherensystem an, das eine in einem Abschnitt, vorzugsweise dessen Querschenkel, schwenkbare Scherenplatte und einen an der Scherenplatte angelenkten Schwenkarm aufweist, der im nächsten Abschnitt, vorzugsweise dessen Querschenkel, schwenkbar verankert ist. Die Schwenkstrebe greift in der Stauposition, z. B. mit der Stützplatte bzw. Mitnehmerlasche, in den Bewegungsweg der Scherenplatte ein, wenn diese durch das Stellelement zum Auffalten der Abschnitte verstellt wird. Dadurch überführt die Scherenplatte die Schwenkstrebe aus der Stauposition in die Aussteifposition und in Ausrichtung mit der Stützfläche des anderen Abschnitts.

Anhand der Zeichnung werden Ausführungsformen des Erfindungsgegenstandes erläutert. Es zeigen:
- Fig. 1: eine Schemadarstellung eines Gestänges eines landwirtschaftlichen Gerätes in Arbeitsstellung und in Ansichtsrichtung von oben zum Boden,
- Fig. 2: ein in Fig. 1 in einem gestrichelten Kreis hervorgehobenes Detail,
- Fig. 3: ein in Fig. 2 durch einen gestrichelten Kreis hervorgehobenes Detail in vergrößertem Maßstab,
- Fig. 4: eine Schwenkstrebe des Gestänges in perspektivischer Darstellung,
- Fig. 5: eine perspektivische Draufsicht auf den in Fig. 3 gezeigten Bereich beim Auseinanderfalten oder Zusammenfalten zweier Abschnitte des Gestänges, und
- Fig. 6: eine Draufsicht auf den Bereich von Fig. 5 in der Transportstellung.

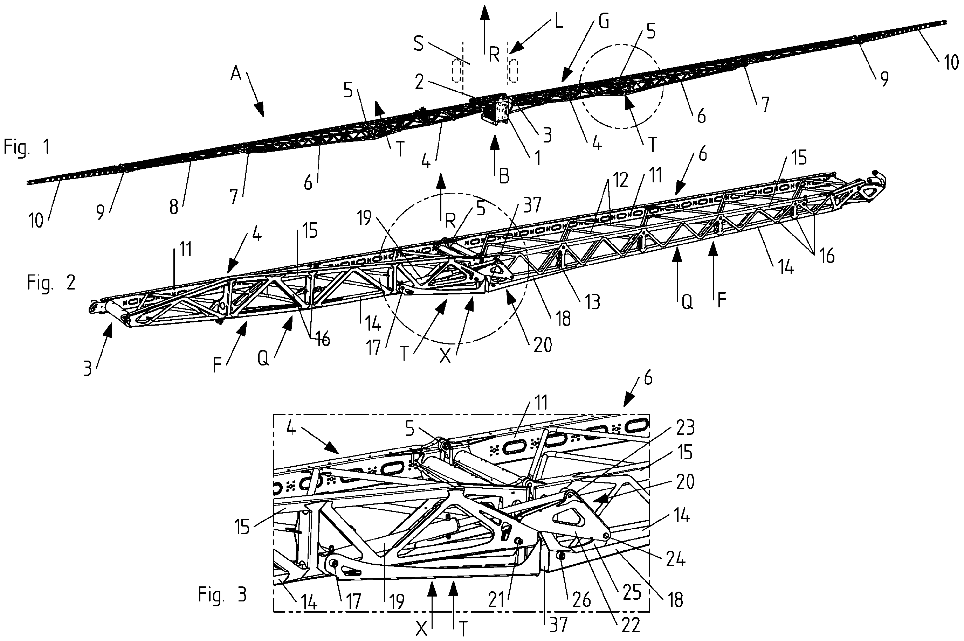

Fig. 1 verdeutlicht ein landwirtschaftliches Gerät L, beispielsweise eine Feldspritze S, mit einem in einer Arbeitsstellung A gezeigten Gestänge G, beispielsweise einem Verteilergestänge zum Ausbringen von Pflanzenschutzmitteln, Pestiziden oder dergleichen, in einer Ansicht von schräg oben gegen den Boden B, wobei das Gerät L beispielsweise in Arbeitsrichtung R über den Boden gefahren wird.

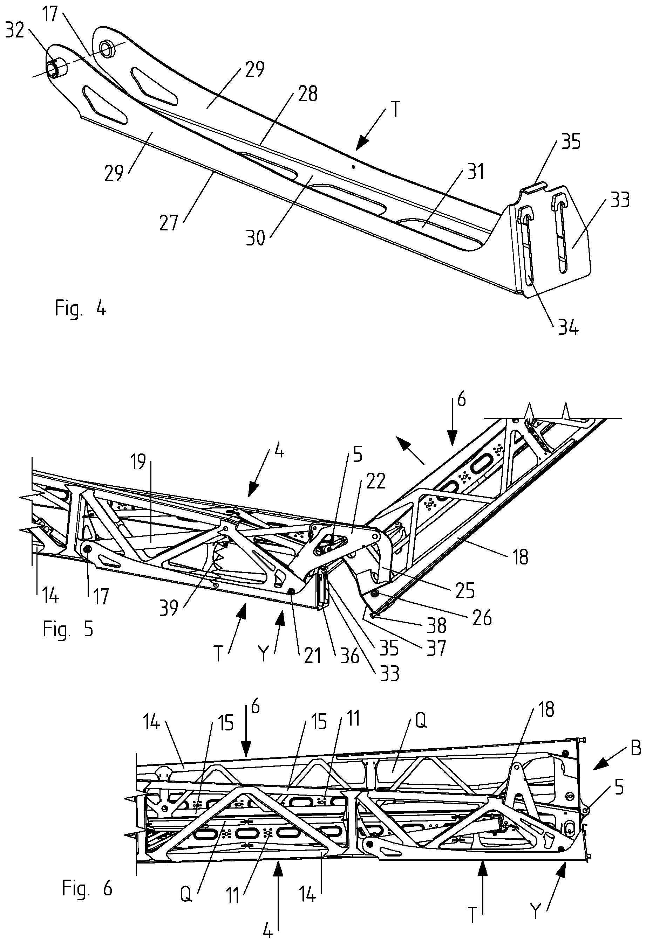

Das Gestänge G ist an einer Verankerung 1 des Geräts L mit einem mittleren Gestängeabschnitt 2 in beiderseitigen Gelenken 3 angebracht und weist an jeder Seite der Verankerung 1 vier Abschnitte 4, 6, 8 und 10 auf, wobei jeweils zwei aufeinanderfolgende Abschnitte durch ein Gelenk 5, 7 und 9 parallel zum Boden B schwenkbar verbunden sind, so dass sich das Gestänge G zick-zack-förmig zusammenfalten lässt und dann eine Transportposition (Fig. 6) z. B. an beiden Seiten des Geräts L einnimmt, um eine vorgeschriebene Transportbreite einzuhalten. In der gezeigten Arbeitsstellung A hat das Gestänge G beispielsweise eine Arbeitsbreite von bis zu 45 m oder sogar mehr.

Ferner sind in Fig. 1 Schwenkstreben T zumindest bei den Gelenken 5 angedeutet. Solche Schwenkstreben T können in analoger Bauweise auch bei den Gelenken 3, 7 und gegebenenfalls sogar bei den Gelenken 9 vorgesehen sein.

Fig. 2 verdeutlicht einen in Fig. 1 durch einen gestrichelten Kreis hervorgehobenen Bereich um das Gelenk 5. Jeder Abschnitt 4, 6 weist einen Untergurt 11 und Diagonal- und/oder Querstreben 12 auf, die nach Art eines hochkant stehenden, schmalen Gitterträgers verbaut sind. Am Untergurt 11 können nicht hervorgehobene Verteileinrichtungen angeordnet sein. In der Arbeitsstellung A in den Fig. 1 und 2 fluchten die Untergurte 11 der Abschnitte 2, 4, 6, 8, 10 quer zur Arbeitsrichtung R und liegen sie im Wesentlichen bodenparallel.

An jedem Abschnitt 4, 6 ist auf der Oberseite ein Querschenkel Q angeordnet, der gegenüber einer Hochseite des Gitterträgers annähernd bodenparallel vorspringt. Jeder Querschenkel Q ist als Fachwerkrahmen F mit durchgehenden Außenprofilen 15, 14 und diese verbindenden Diagonal- und Querstreben 16, vorzugsweise in Leichtbauweise, ausgebildet. Die Querschenkel Q springen abwechselnd gegenüber den Hochseiten vor, um jeden Abschnitt in einer etwa bodenparallelen Ebene auszusteifen. Der Querschenkel Q am Abschnitt 4 springt gegenüber der das Gelenk 5 aufweisenden Hochseite des Abschnitts 4 vor, der Querschenkel Q des Abschnitts 6 hingegen gegenüber der dem Gelenk 5 abgewandten Hochseite des Abschnitts 6.

Die Querschenkel Q sind auf den Oberseiten der Abschnitte 4, 6, beispielsweise den Diagonalstreben 12, verankert. Im Abschnitt 4 ist im Querschenkel Q ein Stellelement 19 an einer Stützachse 17 schwenkbar gehalten. Dieses kann z. B. ein doppelt wirkender Hydrozylinder sein, der über ein Schwenkscherensystem 20 mit dem Querschenkel Q des anderen Abschnitts 6 verbunden ist, und dazu dient, die Abschnitte 4, 6 aufzufalten oder zusammenzufalten. Das Stützgelenk 17 dient ferner als Strebengelenk für die Schwenkstrebe T, die am Querschenkel Q des Abschnitts 4 in einer Ebene annähernd parallel zum Boden zwischen einer in Fig. 2 gezeigten Aussteifposition X und einer in Fig. 5 gezeigten Stauposition Y hin- und herschwenkbar ist, und zwar mittels des Stellelementes 19 in der gezeigten Ausführungsform. Zum Betätigen der Schwenkstrebe T könnte alternativ ein eigenes Stellelement vorgesehen sein. Die Schwenkstrebe T dient in der gezeigten Arbeitsstellung A dazu, den Bereich des Gelenks 5 effizient auszusteifen, indem sie sich an einer Stützfläche 37 des anderen Abschnitts 6 abstützt oder dort sogar (nicht gezeigt) verriegelt ist.

Fig. 3 verdeutlicht in noch größerem Maßstab auch das Schwenkscherensystem 20. Dieses weist eine im Außenprofil 14 des Abschnitts 4 um eine zum Gelenk 5 im Wesentlichen parallele Achse 21 schwenkbare Scherenplatte 22 auf, an der in einem Schwenklager 23 die Kolbenstange des Stellelementes 19, hier des doppelt wirkenden Hydrozylinders, angreift. Die Scherenplatte 22 ist annähernd dreieckförmig und ist an einer Dreieckspitze über eine Achse 24 mit einem Ende eines gebogenen Schwenkarms 25 verbunden, dessen anderes Ende in einer Achse 26 in einem Profil 18 schwenkbar gelagert ist, das auf der Oberseite des Querschenkels Q des Abschnitts 6, genauer auf dem Außenprofil 14, verbaut ist.

Die Schwenkstrebe T befindet sich in Fig. 3 in der Aussteifposition, in der sie mit der Stützfläche 37 des anderen Abschnitts 6 zusammenwirkt.

Fig. 4 verdeutlicht die Schwenkstrebe T in perspektivischer Darstellung. Die Schwenkstrebe T ist beispielsweise ein langgestrecktes U-Profil 27 mit Seitenschenkeln 29 und einem ebenen Boden 30, gegebenenfalls mit Löchern 31, wobei in den Schenkeln 29 Aufnahmen 32 für die Strebenachse 17 vorgesehen sind, während das freie Ende des U-Profils 27 eine ebene Stützplatte 23 aufweist, die in etwa senkrecht zur Ebene des Bodens 30 orientiert ist. In der Stützplatte 33 können Eingriffsschlitze 34 geformt sein. Am oberen Rand der Stützplatte 33 ist beispielsweise als Abbiegung eine von der Stützplatte 33 abgebogene Mitnehmerlasche 35 geformt.

Die Eingriffsschlitze 34 können, wie Fig. 5 verdeutlicht, zum Positionieren von Anschlägen 36 genutzt werden, während an der Stützfläche 37 des Profils 18 Gegenanschläge 38 vorgesehen sind. In der in Fig. 3 gezeigten Arbeitsstellung des Gestänges kooperieren zum Aussteifen des Bereichs des Gelenks 5 die Anschläge 36 und die Gegenanschläge 38. Die Mitnehmerlasche 35 liegt im Bewegungsweg der Scherenplatte 22, wenn beispielsweise gemäß Fig. 5 das Stellelement 19 den im Gelenk 5 noch abknickenden Abschnitt 6 mit dem Abschnitt 4 auszurichten beginnt, bzw. dieser in Richtung eines Pfeiles aus der Ausrichtung mit dem Abschnitt 4 umgefaltet wird.

In der gezeigten Ausführungsform wird in Fig. 5 die Schwenkstrebe T z. B. durch eine Zugfeder 39 in Richtung zur in Fig. 5 gezeigten Stauposition Y vorgespannt, so dass sie bei Wegschwenken der Scherenplatte 22 selbsttätig die Stauposition Y einnimmt.

Der Abstand zwischen den kooperierenden Anschlägen 36 und 38 vom Gelenk 5 ist optimal groß, und im gezeigten Ausführungsbeispiel beispielsweise deutlich größer als die in Arbeitsrichtung R gesehene Breite des Untergurts 11, um eine optimale Aussteifung im Gelenkbereich zu erzielen.

Fig. 6 zeigt die Abschnitte 4 und 6 in der Transportstellung B des Gestänges. Damit die in Fig. 6 gezeigte Transportstellung B mit ineinander geschachtelten Querstegen Q der beiden Abschnitte 4, 6 möglich ist, sind die Querstege Q auf unterschiedlichen Höhenniveaus angeordnet, so dass sie beim Zusammenfalten der Abschnitte 6 und 4 gemäß Fig. 6 aneinander vorbeiführbar sind. Die Untergurte 11 der beiden Abschnitte 4, 6 können dabei ganz eng aneinander platziert sein. Alle Abschnitte 4, 6, 8, 10 können in der Transportrichtung B zueinander parallel nahezu oder vollständig zueinander liegen, wobei die Querstreben Q innerhalb der Transportbreite verschachtelt sind.

Die Kombination der die Gelenkbereiche aussteifenden Schwenkstreben T und der die Abschnitte 4, 6, 8 aussteifenden Querschenkel Q führt zu einem in einer bodenparallelen Ebene in der Arbeitsstellung biegesteifen Gestänge G, das kaum eine Tendenz zu Schwingungen hat.

## Patentansprüche

1. Gestänge (G) eines landwirtschaftlichen Geräts (L), insbesondere Verteilergestänge einer Feldspritze (S), mit mehreren Abschnitten (4, 6, 8, 10), die über im Wesentlichen bodensenkrechte Gelenke (3, 5, 7, 9) zwischen einer aufgefalteten Arbeitsstellung (A), in der die Abschnitte annähernd quer zur Arbeitsrichtung (R) und in etwa bodenparallel fluchten, und einer zick-zack-förmig zusammengefalteten Transportstellung (B) durch bei den Gelenken angeordnete Stellelemente (19) verstellbar sind, **dadurch gekennzeichnet, dass** bei zumindest einem Gelenk (5) zwischen zwei aufeinanderfolgenden Abschnitten (4, 6) an einem Abschnitt (4) wenigstens eine zwischen einer relativ zum Abschnitt ausgeschwenkten Aussteifposition (X) und einer zum Abschnitt eingeschwenkten Stauposition (Y) schwenkbare Schwenkstrebe (T) angeordnet ist, die in der Arbeitsstellung (A) und in der Aussteifposition (X) das Gelenk (5) mit Abstand (R) überbrückt und am anderen Abschnitt (6) abstützbar oder verriegelbar ist, und dass die Schwenkstrebe (T) durch das Stellelement (19) zumindest in die Aussteifposition (X) schwenkbar ist.

2. Gestänge nach Anspruch 1, **dadurch gekennzeichnet, dass** die Schwenkstrebe (T) in Schwenkrichtung zur Stauposition (Y) federbelastet ist, vorzugsweise durch eine Zug- oder Torsionsfeder (39).

3. Gestänge nach Anspruch 1, **dadurch gekennzeichnet, dass** die Schwenkstrebe (T) an einem als Fachwerkrahmen (F) ausgebildeten Querschenkel (Q) des einen Abschnitts (4) in einem annähernd zum Gelenk (5) parallelen Strebengelenk (17) gelagert ist, dass der Querschenkel (Q) in etwa bodenparallel gegenüber einer dem Gelenk (5) zugewandten Hochseite des Abschnitts (4) vorspringt, und dass der andere Abschnitt (6) ebenfalls einen, jedoch vom Gelenk (5) abgewandt in etwa bodenparallel vorspringenden Querschenkel (Q) aufweist, an welchem die Schwenkstrebe (T) in der Aussteifposition (X) angreift.

4. Gestänge nach wenigstens einem der vorhergehenden Ansprüche, **dadurch gekennzeichnet, dass** die Gelenke (5, 7) an den Enden des Abschnitts (6) bezüglich einer Längsachse des Abschnitts (6) gegeneinander quer versetzt sind.

5. Gestänge nach Anspruch 3, **dadurch gekennzeichnet, dass** die an den aufeinanderfolgenden Abschnitten (4, 6, 8), vorzugsweise ausgenommen dem in der Arbeitsstellung (A) äußersten Abschnitt (10), angeordneten Querschenkel (Q) abwechselnd gegenüber den Hochseiten der Abschnitte vorspringen.

6. Gestänge nach wenigstens einem der vorhergehenden Ansprüche 3 oder 5, **dadurch gekennzeichnet, dass** der Querschenkel (Q) und die Schwenkstrebe (T) jeweils an der dem Boden (B) abgewandten Oberseite des Abschnitts (4. 6, 8) angeordnet sind.

7. Gestänge nach wenigstens einem der vorhergehenden Ansprüche 3, 5 und 6, **dadurch gekennzeichnet, dass** die Querschenkel (Q) und Oberseiten der Abschnitte (4, 6, 8, 10) derart auf unterschiedlichen Höhenniveaus angeordnet sind, dass die Querschenkel (Q) in der Transportstellung (B) einander überlappend ineinander schachtelbar sind.

8. Gestänge nach Anspruch 3, **dadurch gekennzeichnet, dass** das Strebengelenk (17) mit einem Stützgelenk des Stellelements (19) kombiniert ist, vorzugsweise an einem Außenprofil (14) des den Querschenkel (Q) bildenden Fachwerkrahmens (F).

9. Gestänge nach Anspruch 1, **dadurch gekennzeichnet, dass** die Schwenkstrebe (T) ein langestrecktes U-Profil (27) ist, das zum Angriff am nächsten Abschnitt (6) am freien Ende eine abgewinkelte Stützplatte (33) aufweist.

10. Gestänge nach Anspruch 9, **dadurch gekennzeichnet, dass** die Stützplatte (33) wenigstens einen Eingriffsschlitz (34) und/oder an einem freien Stützplattenrand eine Mitnehmerlasche (35) aufweist.

11. Gestänge nach Anspruch 10, **dadurch gekennzeichnet, dass** im Eingriffsschlitz (34) ein Anschlag (36) positionierbar und auf einen, vorzugsweise einstellbaren, Gegenanschlag (38) an einer Stützfläche (37) am Ende des anderen Abschnitts (6) ausrichtbar ist.

12. Gestänge nach wenigstens einem der vorhergehenden Ansprüche 3, 5, 6, 7 oder 8, **dadurch gekennzeichnet, dass** die Stützfläche (37) an einem oberseitig auf dem Querschenkel (Q) des anderen Abschnitts (6) montierten Profil (18) angeordnet ist.

13. Gestänge nach Anspruch 8, **dadurch gekennzeichnet, dass** die Schwenkstrebe (T) in der Stauposition (Y) über das Außenprofil (14) des Fachwerkrahmens (F) stülpbar ist.

14. Gestänge nach wenigstens einem der vorhergehenden Ansprüche, **dadurch gekennzeichnet, dass** das Stellelement (19) ein doppelt wirkender Hydrozylinder ist, der an einem Schwenkscherensystem (20) angreift, das eine im einem Abschnitt (4), vorzugsweise dessen Querschenkel (Q), schwenkbare Scherenplatte (22) und einen an der Scherenplatte (22) angelenkten Schwenkarm (25) aufweist, der im anderen Abschnitt (6), vorzugsweise dessen Querschenkel (Q), schwenkbar verankert ist, und dass die Schwenkstrebe (T) in der Stauposition (Y) in den Bewegungsweg der Scherenplatte (22) eingreift, vorzugsweise mit der Mitnehmerlasche (35) der Stützplatte (33) des U-Profils (27).

## Claims

1. Boom (G) of an agricultural implement (L), in particular a distributor boom of a field sprayer (S), having a plurality of sections (4, 6, 8, 10) which are adjustable via joints (3, 5, 7, 9), which are substantially perpendicular to the ground, between an unfolded working position (A), in which the sections are aligned approximately transversely to the working direction (R) and more or less parallel to the ground, and a transport position (B), folded up in a zigzag shape, by adjusting elements (19) arranged at the hinges, **characterized in that**, at at least one joint (5) between two successive sections (4, 6), on one section (4), at least one pivoting strut (T) that is pivotable between a reinforcing position (X) pivoted out relative to the section and a stowed position (Y) pivoted in with respect to the section is arranged, said pivoting strut (T), in the working position (A) and in the reinforcing position (X), bridging the joint (5) at a spacing (R) and being supportable on or lockable to the other section (6), and **in that** the pivoting strut (T) is pivotable at least into the reinforcing position (X) by the adjusting element (19).

2. Boom according to Claim 1, **characterized in that** the pivoting strut (T) is spring-loaded in a pivoting direction towards the stowed position (Y), preferably by a tension spring or torsion spring (39).

3. Boom according to Claim 1, **characterized in that** the pivoting strut (T) is mounted on a transverse leg (Q), in the form of a framework (F), of the one section (4) in a strut joint (17) approximately parallel to the joint (5), **in that** the transverse leg (Q) protrudes more or less parallel to the ground with respect to a vertical side, facing the joint (5), of the section (4), and **in that** the other section (6) likewise has a transverse leg (Q) that protrudes more or less parallel to the ground, but in a manner facing away from the joint (5), the pivoting strut (T) acting on said transverse leg (Q) in the reinforcing position (X).

4. Boom according to at least one of the preceding claims, **characterized in that** the joints (5, 7) at the ends of the section (6) are offset transversely to one another with respect to a longitudinal axis of the section (6).

5. Boom according to Claim 3, **characterized in that** the transverse legs (Q) arranged on the successive sections (4, 6, 8), preferably apart from the section (10) that is outermost in the working position (A), protrude alternately with respect to the vertical sides of the sections.

6. Boom according to at least one of the preceding Claims 3 and 5, **characterized in that** the transverse leg (Q) and the pivoting strut (T) are each arranged on the top side, facing away from the ground (B), of the section (4, 6, 8).

7. Boom according to at least one of the preceding Claims 3, 5 and 6, **characterized in that** the transverse legs (Q) and top sides of the sections (4, 6, 8, 10) are arranged at different heights such that the transverse legs (Q) are nestable in one another in a manner overlapping one another in the transport position (B).

8. Boom according to Claim 3, **characterized in that** the strut joint (17) is combined with a supporting joint of the adjusting element (19), preferably on an external profile (14) of the framework (F) forming the transverse leg (Q).

9. Boom according to Claim 1, **characterized in that** the pivoting strut (T) is an elongate U profile (27) which, in order to engage with the next section (6), has an angled support plate (33) at its free end.

10. Boom according to Claim 9, **characterized in that** the support plate (33) has at least one engagement slot (34) and/or an attachment lug (35) on a free support-plate edge.

11. Boom according to Claim 10, **characterized in that** a stop (36) is positionable in the engagement slot (34) and is orientable with a, preferably settable, counterpart stop (38) on a supporting face (37) on the end of the other section (6).

12. Boom according to at least one of the preceding Claims 3, 5, 6, 7 and 8, **characterized in that** the supporting face (37) is arranged on a profile (18) mounted on the top side of the transverse leg (Q) of the other section (6).

13. Boom according to Claim 8, **characterized in that** the pivoting strut (T) is able to be fitted over the external profile (14) of the framework (F) in the stowed position (Y).

14. Boom according to at least one of the preceding claims, **characterized in that** the adjusting element (19) is a double-acting hydraulic cylinder which acts on a pivoting-scissor system (20) which has a scissor plate (22) that is pivotable in one section (4), preferably the transverse leg (Q) thereof, and a pivot arm (25) that is hinged to the scissor plate (22) and is anchored in a pivotable manner in the other section (6), preferably the transverse leg (Q) thereof, and **in that** the pivoting strut (T) engages in the movement path of the scissor plate (22) in the stowed position (Y), preferably with the attachment lug (35) of the support plate (33) of the U profile (27).

## Revendications

1. Rampe (G) d'un outil agricole (L), en particulier rampe de distribution d'un pulvérisateur à cultures (S), comprenant plusieurs sections (4, 6, 8, 10) qui sont réglables par le biais d'articulations (3, 5, 7, 9) sensiblement perpendiculaires au sol entre une position de travail dépliée (A), dans laquelle les sections sont alignées à peu près transversalement à la direction de travail (R) et presque parallèlement au sol, et une position de transport repliée en zigzag (B) par le biais d'éléments de réglage (19) disposés près des articulations, **caractérisée en ce que**, près d'au moins une articulation (5), au moins une jambe pivotante (T) pouvant pivoter entre une position de raidissement (X), déployée par pivotement par rapport à la section, et une position de rangement (Y), repliée par pivotement par rapport à la section, est disposée entre deux sections successives (4, 6) au niveau d'une section (4), laquelle jambe pivotante couvre l'articulation (5) à une distance (R) dans la position de travail (A) et dans la position de raidissement (X) et peut être verrouillée ou venir en appui sur l'autre section (6), et **en ce que** la jambe pivotante (T) peut être pivotée au moins dans la position de raidissement (X) par l'élément de réglage (19).

2. Rampe selon la revendication 1, **caractérisée en ce que** la jambe pivotante (T) est contrainte par ressort vers la position de rangement (Y) dans la direction de pivotement, de préférence par un ressort de traction ou de torsion (39).

3. Rampe selon la revendication 1, **caractérisée en ce que** la jambe pivotante (T) est montée sur une branche transversale (Q), conçue comme un cadre en treillis (F), de l'une des sections (4) dans une articulation de jambe (17) presque parallèle à l'articulation (5), **en ce que** la branche transversale (Q) fait saillie à peu près parallèlement au sol par rapport à un côté haut de la section (4) dirigé vers l'articulation (5), et **en ce que** l'autre section (6) comporte également une branche transversale (Q) qui fait saillie à peu près parallèlement au sol, mais à l'opposé de l'articulation (5), et avec laquelle la jambe pivotante (T) s'engage dans la position de raidissement (X).

4. Rampe selon l'une au moins des revendications précédentes, **caractérisée en ce que** les articulations (5, 7) sont décalées transversalement les unes des autres aux extrémités de la section (6) par rapport à un axe longitudinal de la section (6).

5. Rampe selon la revendication 3, **caractérisée en ce que** les branches transversales (Q) disposées au niveau des sections successives (4, 6, 8), de préférence à l'exception de la section (10) la plus extérieure dans la position de travail (A), font saillie alternativement par rapport aux côtés hauts des sections.

6. Rampe selon l'une au moins des revendications précédentes 3 à 5, **caractérisée en ce que** la branche transversale (Q) et la jambe pivotante (T) sont disposées au niveau du côté supérieur, opposé au sol, de la section (4. 6, 8) .

7. Rampe selon l'une au moins des revendications précédentes 3, 5 et 6, **caractérisée en ce que** les branches transversales (Q) et les côtés supérieurs des sections (4, 6, 8, 10) sont disposés à différents niveaux en hauteur de manière à pouvoir emboîter à chevauchement les branches transversales (Q) dans la position de transport (B).

8. Rampe selon la revendication 3, **caractérisée en ce que** l'articulation de jambe (17) est combinée avec un joint de support de l'élément de réglage (19), de préférence au niveau d'un profilé extérieur (14) du cadre en treillis (F) formant la branche transversale (Q) .

9. Rampe selon la revendication 1, **caractérisée en ce que** la jambe pivotante (T) est un profilé en U (27) allongé qui comporte à l'extrémité libre une plaque de support coudée (33) destinée à s'engager avec la section suivante (6).

10. Rampe selon la revendication 9, **caractérisée en ce que** la plaque de support (33) comporte au moins une fente d'engagement (34) et/ou, au niveau d'un bord de plaque de support libre, une attache d'entraînement (35) .

11. Rampe selon la revendication 10, **caractérisée en ce qu'**une butée (36) peut être positionnée dans la fente d'engagement (34) et peut être orientée sur une butée homologue (38), de préférence réglable, au niveau d'une surface d'appui (37) à l'extrémité de l'autre section (6).

12. Rampe selon l'une au moins des revendications précédentes 3, 5, 6, 7 ou 8, **caractérisée en ce que** la surface d'appui (37) est prévue au niveau d'un profilé (18) monté du côté supérieur de la branche transversale (Q) de l'autre section (6) .

13. Rampe selon la revendication 8, **caractérisée en ce que**, dans la position de rangement (Y), la jambe pivotante (T) est retournée par-dessus le profilé extérieur (14) du cadre en treillis (F).

14. Rampe selon l'une au moins des revendications précédentes, **caractérisée en ce que** l'élément de réglage (19) est un vérin hydraulique à double action qui s'engage avec un système de cisaillement pivotant (20) qui comporte une plaque de cisaillement (22) pouvant pivoter dans une section (4), de préférence la branche transversale (Q) de celle-ci, et un bras pivotant (25) qui est articulé sur la plaque de cisaillement (22) et qui est ancré de manière pivotante dans l'autre section (6), de préférence la branche transversale (Q) de celle-ci, et **en ce que**, dans la position de rangement (Y), la jambe pivotante (T) s'engage dans la trajectoire de déplacement de la plaque de cisaillement (22), de préférence avec l'attache d'entraînement (35) de la plaque de support (33) du profilé en U (27).
